# EUROPÄISCHE PATENTSCHRIFT

(11) **EP 3 408 127 B1**
(45) Veröffentlichungstag und Bekanntmachung des Hinweises auf die Patenterteilung: **13.11.2019**
(21) Anmeldenummer: 16819319.1
(22) Anmeldetag: 22.12.2016
(51) Int. Cl.: B60L 3/04

(54) **HOCHVOLTBORDNETZSYSTEM MIT EINER PYROTECHNISCHEN TRENNVORRICHTUNG, UND VERFAHREN ZUM BETREIBEN DES HOCHVOLTBORDNETZSYSTEMS**
HIGH-VOLTAGE VEHICLE ELECTRICAL SYSTEM HAVING A PYROTECHNIC DISCONNECTING DEVICE, AND METHOD FOR OPERATING THE HIGH-VOLTAGE VEHICLE ELECTRICAL SYSTEM
SYSTÈME DE RÉSEAU DE BORD HAUTE TENSION COMPRENANT UN DISPOSITIF DE COUPURE PYROTECHNIQUE ET PROCÉDÉ POUR FAIRE FONCTIONNER CE SYSTÈME DE RÉSEAU DE BORD HAUTE TENSION

(30) Priorität: 25.01.2016 DE 102016101252
(43) Veröffentlichungstag der Anmeldung: 05.12.2018
(73) Patentinhaber: Auto-Kabel Management GmbH, 79688 Hausen i.W. (DE)
(72) Erfinder: BETSCHER, Simon, 41515 Grevenbroich (DE); TAZARINE, Wacim, 41812 Erkelelenz (DE)
(74) Vertreter: Cohausz & Florack
(86) Internationale Anmeldenummer: PCT/EP2016/082309
(87) Internationale Veröffentlichungsnummer: WO 2017/129334

(56) Entgegenhaltungen:
- DE-A1-102013 017 409

## Beschreibung

Der Gegenstand betrifft ein Hochvoltbordnetzsystem, insbesondere in automotiven Anwendungen, beispielweise in hybrid-elektrischen Fahrzeugen (HEV), batterie-elektrischen Fahrzeugen (BEV) oder Brennstoffzellen-Fahrzeugen (FCV). Darüber hinaus betrifft der Gegenstand ein Verfahren zum Betreiben eines solchen Hochvoltbornetzsystems.

Der Anteil an elektrisch betriebenen Fahrzeugen wird in Zukunft steigen. Hierbei ist ein schrittweiser Übergang von fossilen Treibstoffen zu elektrischen Fahrzeugantrieben zu beobachten. Die gegenständliche Anwendung ist beispielsweise in Hybridfahrzeugen (HEV) batterie-elektrischen Fahrzeugen (BEV) als auch in Brennstoffzellen-Fahrzeugen (FCV) sinnvoll.

Da in den nächsten Jahren und Jahrzenten der Anteil an elektrisch betriebenen Fahrzeugen, insbesondere mit elektrischen Primärantrieben, zunehmen wird, verändern sich die Anforderungen an die Bordnetze erheblich. Maßgeblich für die Akzeptanz von elektrischen Antrieben ist dabei die Zuverlässigkeit als auch Sicherheit des Hochvoltbornetzsystems.

Abhängig von dem Grad der Elektrifizierung, also welcher Anteil der Antriebsleistung elektrisch ist, liegt die elektrische Leistung im Bereich zwischen 10 und 120 kW. Im Vergleich zu herkömmlichen 12V Bordnetzen ist die Betriebsspannung in den Bordnetzen von elektrisch betriebenen Fahrzeugen erheblich höher. Dies wird durch die Integration von Hochvolt-Batterien als aufladbare Energiespeicher ermöglicht. Durch die erheblich höheren Betriebsspannungen steigt die Komplexität des Bordnetzes und somit auch die Anforderungen an Bordnetzkomponenten wie Relais, Leitungen und Sicherungen.

Insbesondere zu sicherheitskritischen Zeitpunkten ist die verlässliche Abschaltung des Hochvoltbordnetzes von der Hochvoltbatterie ein ganz wesentlicher Punkt. Bei Spannungen von bis zu 1000V DC und bei Kurzschlussströmen in Kiloamperbereich sind die Anforderungen an Schaltrelais und Sicherungen erheblich. Das zuverlässige Schaltverhalten der Relais als auch der Sicherungen muss sowohl im Normalfall als auch im Falle eines Unfalls sichergestellt sein. Im Betriebsfall ist ein Schalten bei erheblich geringeren Strömen notwendig als im Falle eines Unfalls oder einer Störung. Im Betriebsfall, also beispielsweise bei Wartung und Instandhaltung, muss zwar eine galvanische Trennung erfolgen, die zu schaltenden Ströme sind aber relativ gering. Die Abschaltung kann im Betriebsfall oder auch in sonstigen Sondersituationen, in dem kein Kurzschlussstrom fließt, über Schaltrelais ermöglicht werden.

Im Kurzschlussfall fließen jedoch erheblich höhere Ströme und auch dann muss ein sicheres Abschalten möglich sein. Herkömmlicherweise wird hierzu sowohl High-side als auch Low-side eine Kombination von Sicherungen und Relais genutzt. Die Sicherungen dienen zum Abschalten im Kurzschlussfall, wohingegen die Relais in der Regel zum Abschalten im Betriebsfall dienen.

Gegenständlich ist erkannt worden, dass die herkömmliche Kombination aus Sicherung und Relais einen erheblichen Aufwand bedeutet. Die Auslegung der jeweiligen Kombination von Sicherung und Relais muss aufeinander abgestimmt sein, um auch im Kurzschlussfall ein sicheres Auslösen der Sicherung zu gewährleisten. Hierdurch entstehen hohe Anforderungen an die Auslösekennlinien von Relais und Sicherungen, was zu einem erheblichen Kostennachteil führt.

Die DE 10 2013 017 409 A1 offenbart eine Erfindung, die ein Batteriesystem, insbesondere für ein elektromotorisch angetriebenes Fahrzeug betrifft, umfassen eine Hochvolt-Batterie und ein Batterie-Management-System.

Die DE 10 2009 020 559 A1 zeigt eine Vorrichtung zur elektrischen Absicherung eines Elektrofahrzeugs. Zur Sicherung von Hochvolt-Batterien von Elektrofahrzeugen bei Hochwasser ist eine Trenneinrichtung zum elektrischen Trennen einer Fahrzeugbatterie von einer elektrischen Verteilung innerhalb des Fahrzeugs vorgesehen.

Somit lag dem Gegenstand die Aufgabe zugrunde, eine Sicherung für ein Hochvoltbordnetzsystem zur Verfügung zu stellen, welche eine zuverlässige Kurzschlussabschaltung bei geringen Komponentenkosten ermöglicht.

Diese Aufgabe wird durch ein Hochvoltbordnetzsystem nach Anspruch 1 sowie ein Verfahren zum Betreiben eines Hochvoltbordnetzsystems nach Anspruch 10 gelöst.

Ein gegenständliches Hochvoltbordnetzsystem ist in der Regel zwischen einer Hochvoltbatterie und einem elektrischen Antrieb angeordnet. Im Gegensatz zu herkömmlichen 12V Bordnetzen sind in Hochvoltbordnetzen sowohl der Batteriepluspol (High-side) als auch der Batterieminuspol (Low-side) über ein elektrisches Kabel mit dem elektrischen Motor, vorzugsweise über einen dazwischen angeordneten DC/DC oder AC/DC Wandler, verbunden. Die Masserückführung erfolgt somit nicht über die Karosse. Hochvoltbatterien im Sinne des Gegenstandes sind in der Regel wiederaufladbare Energiespeicher, welche Ausgangsspannungen zwischen einigen 100V bis zu einigen 1000V zur Verfügung stellen. Die Ausgangsspannungen werden als Gleichspannungen (DC) über die elektrischen Leitungen des Hochvoltbordnetzsystems an den elektrischen Antriebsmotor angelegt. Ausgangsseitig des Hochvoltbordnetzsystems ist in der Regel noch ein DC/DC oder AC/DC Wandler zur Wandlung der Eingangsspannung in eine geeignete Ausgangsspannung für den elektrischen Antrieb vorgesehen.

Die elektrischen Antriebe werden mit sehr hohen Leistungen betrieben, welche zwischen 10KW und über 120 kW liegen. Diese hohen Leistungen bedingten auch bei den genannten hohen Spannungen noch sehr hohe Ströme.

Während eines Normalbetriebs werden solche hohen Ströme in der Regel über ein High-side Relais geschaltet. Ein solches High-side Relais liegt zwischen dem High-side Anschlusskontakt und dem High-side Ausgangskontakt. Low-side wird in der Regel nur dann im Betrieb geschaltet, wenn bereits das High-side Relais geschaltet wurde. Aus diesem Grunde ist das Low-side Relais in der Regel für das Schalten geringerer Ströme ausgelegt.

Gegenständlich ist nun erkannt worden, dass für eine Notfallabschaltung, beispielsweise im Crashfall, auch das Low-side Relais einen hohen Strom schalten
Diese Aufgabe wird durch ein Hochvoltbordnetzsystem nach Anspruch 1 sowie ein Verfahren zum Betreiben eines Hochvoltbordnetzsystems nach Anspruch 10 gelöst.

Ein gegenständliches Hochvoltbordnetzsystem ist in der Regel zwischen einer Hochvoltbatterie und einem elektrischen Antrieb angeordnet. Im Gegensatz zu herkömmlichen 12V Bordnetzen sind in Hochvoltbordnetzen sowohl der Batteriepluspol (High-side) als auch der Batterieminuspol (Low-side) über ein elektrisches Kabel mit dem elektrischen Motor, vorzugsweise über einen dazwischen angeordneten DC/DC oder AC/DC Wandler, verbunden. Die Masserückführung erfolgt somit nicht über die Karosse. Hochvoltbatterien im Sinne des Gegenstandes sind in der Regel wiederaufladbare Energiespeicher, welche Ausgangsspannungen zwischen einigen 100V bis zu einigen 1000V zur Verfügung stellen. Die Ausgangsspannungen werden als Gleichspannungen (DC) über die elektrischen Leitungen des Hochvoltbordnetzsystems an den elektrischen Antriebsmotor angelegt. Ausgangsseitig des Hochvoltbordnetzsystems ist in der Regel noch ein DC/DC oder AC/DC Wandler zur Wandlung der Eingangsspannung in eine geeignete Ausgangsspannung für den elektrischen Antrieb vorgesehen.

Die elektrischen Antriebe werden mit sehr hohen Leistungen betrieben, welche zwischen 10KW und über 120 kW liegen. Diese hohen Leistungen bedingten auch bei den genannten hohen Spannungen noch sehr hohe Ströme.

Während eines Normalbetriebs werden solche hohen Ströme in der Regel über ein High-side Relais geschaltet. Ein solches High-side Relais liegt zwischen dem High-side Anschlusskontakt und dem High-side Ausgangskontakt. Low-side wird in der Regel nur dann im Betrieb geschaltet, wenn bereits das High-side Relais geschaltet wurde. Aus diesem Grunde ist das Low-side Relais in der Regel für das Schalten geringerer Ströme ausgelegt.

Gegenständlich ist nun erkannt worden, dass für eine Notfallabschaltung, beispielsweise im Crashfall, auch das Low-side Relais einen hohen Strom schalten können muss. Die Erfinder haben jedoch erkannt, dass eine hohe Stromschaltfähigkeit, wie sie High-side vorgesehen ist, nicht notwendig ist, um ein zuverlässiges Schalten sicherzustellen. Vielmehr kann mit einer gegenständlichen Reihenschaltung aus einem Schaltrelais und einer pyrotechnischen Trennvorrichtung eine ausreichende Absicherung zwischen dem Low-side Anschlusskontakt und dem Low-side Ausgangskontakt gewährleistet werden.

Im Notfall schaltet zunächst das erste Schaltrelais den Kurzschlussstrom zumindest teilweise. Da sehr hohe Ströme auftreten, kann es zu der sogenannten Levitation kommen. Levitation wird auch als "electric magnetic repulsion" bezeichnet. Dabei kommt es trotz angesteuerter Spule im Relais zu einer Zwangsbewegung des Brückenkontakts. Die Ursache hierfür liegt in einer elektromagnetischen Abstoßung zwischen zwei gegenläufig stromdurchflossenen Leitern. Im Falle des Relais entsteht die Abstoßung dadurch, dass der Festkontakt keinen Vollflächenkontakt mit dem Brückenkontakt bildet. Das führt dazu, dass der Strom über den Festkontakt zu der Kontaktstelle mit dem Brückenkontakt fließt und von dort zurück. Hierdurch ergibt sich ein Strom in entgegengesetzter Richtung. Die dadurch entstehenden, nicht orthogonalen Stromrichtungen führen zur Abstoßung zwischen dem Brückenkontakt und dem Festkontakt. Kommt es zu einer Levitation im Relais, kann es zu Kontaktöffnungen kommen, und über diese Kontaktöffnung können Lichtbögen zwischen dem Brückenkontakt und dem Festkontakt entstehen.

Wenn das Relais öffnet, entsteht ein Lichtbogen, an dem der größte Teil der Spannung bereits abfällt. Dies führt dazu, dass der pyrotechnische Trenner nur noch einen geringeren Strom schalten muss. Die Erfinder haben nun erkannt, dass für die Notfallabschaltung die Levitation im Low-side Relais nutzbar gemacht wird. Die Levitation im ersten Schaltrelais führt bereits zu einer erheblichen Reduktion der Schaltspannung bzw. des Schaltstroms in der pyrotechnischen Trennvorrichtung. Diese kann dann ohne das Auftreten eines Lichtbogens den Reststrom schalten und die Hochvoltbatterie von dem elektrischen Motor auch Low-side trennen.

Wie bereits erläutert, verfügt das Hochvoltbordnetzsystem auch über eine High-side Absicherung. Diese wird gemäß einem vorteilhaften Ausführungsbeispiel durch zumindest ein zweites Schaltrelais realisiert, welches zwischen dem High-side Anschlusskontakt und dem High-side Ausgangskontakt angeordnet ist. Neben dem zweiten Schaltrelais kann High-side auch eine weitere Sicherung vorgesehen sein.

Wie bereits erläutert, wird im Normalbetrieb der Strom über das erste und das zweite Schaltrelais fließen. Es versteht sich, dass der Strom auch über die Sicherung bzw. das pyrotechnische Trennelement fließt. Die Stromtragfähigkeit, insbesondere die DC Stromtragfähigkeit der beiden Schaltrelais ist somit in etwa gleich auszulegen. Insbesondere sind Stromtragfähigkeiten von über 100A, vorzugsweise über 200A notwendig, um die im Normalbetrieb fließenden Ströme in den Schaltrelais zu führen, ohne dass diese beschädigt werden.

Ferner wird im Normalbetrieb die Hochvoltbatterie von dem elektrischen Motor über das High-side Schaltrelais getrennt. Erst nach Trennung des High-side Schaltrelais kann auch das erste Schaltrelais Low-side geöffnet werden. Da dann bereits kein Strom mehr fließt, kann das erste Schaltrelais für einen geringeren Schaltstrom ausgelegt sein, als das erste Schaltrelais.

Erfindungsgemäß ist jedoch erkannt worden, dass selbst dann eine Notfallabschaltung High-side als auch Low-side im Falle eines Kurzschlusses möglich ist. Hierfür wird die im ersten Schaltrelais auftretende Levitation nutzbar gemacht, in dem der pyrotechnische Trenner zum Zeitpunkt der Levitation im ersten Schaltrelais trennt. Da der Schaltstrom durch die auftretende Levitation im ersten Schaltrelais im pyrotechnischen Trenner bereits reduziert ist, kann dieser für einen geringen Schaltstrom ausgelegt werden.

Der pyrotechnische Trenner ist insofern vorteilhaft gegenüber einer herkömmlichen Sicherung, die in Reihe zu einem Low-side Schaltrelais geschaltet ist, als dass eine Sicherung selbstauslösend ist und vergleichsweise viel elektrische Energie benötigt, um auszulösen. Eine Sicherung kann in der Regel nur dann schnell auslösen, wenn die gesamte Energie des Kurzschlusses auch tatsächlich der Sicherung zur Verfügung steht. Im Falle der Levitation teilt sich die Batteriespannung jedoch auf die Sicherung und das Relais auf. Wenn das Relais durch Levitation öffnet, entsteht ein Lichtbogen, in dem der größte Teil der Spannung bereits abfällt. Dann steht einer herkömmlichen Sicherung aber nur vergleichsweise wenig Leistung zur Verfügung, so dass die Sicherung nicht mehr schnell genug auslöst. Es kann sogar dazu kommen, dass die Sicherung gar nicht mehr auslöst, da der durch die Levitation auftretende Spannungsabfall bereits so groß ist, dass die Sicherung nicht mehr auslösen kann.

Die Erfinder haben jedoch erkannt, dass durch den Einsatz des pyrotechnischen Trenners die ansonsten zu vermeidende Levitation im Low-side Schaltrelais genutzt werden kann.

Gemäß einem Ausführungsbeispiel wird vorgeschlagen, dass die pyrotechnische Trennvorrichtung durch ein Trennsignal aktiviert wird. Dieses von außen eingetragene Trennsignal kann beispielsweise von einem Airbagsteuergerät kommen, welches im Crashfall eine Auslösung des Airbags bewirkt. In einem solchen Fall ist es auch sinnvoll, die Hochvoltbatterie von dem Bordnetz zu trennen. Das Auslösesignal führt somit zu einem Öffnen des pyrotechnischen Trenners. Eine Zündung des pyrotechnischen Trenners kann durch ein beliebiges externes Trennsignal erfolgen. Beispielsweise kann auch eine Strommessung in dem Bordnetz, beispielsweise Low-side, erfolgen und bei einem Überstrom kann ein Auslösesignal der pyrotechnischen Trennvorrichtung zugeführt werden.

Die pyrotechnische Trennvorrichtung ist in der Regel dadurch ausgezeichnet, dass eine pyrotechnische Trennpille durch einen elektrischen Zündimpuls aktiviert werden kann. Die dadurch bewirkte pyrotechnische Reaktion führt zu einem mechanischen Auftrennen einer elektrischen Verbindung an einer Trennstelle.

Die pyrotechnische Trennvorrichtung wird gemäß einem Ausführungsbeispiel vorteilhaft derart angesteuert, dass sie bei einer Levitation des ersten Schaltrelais aktiviert ist. Im Kurzschlussfall fließt ein hoher Strom über das Low-side Relais. Dort kommt es zu einer Levitation und der Brückenkontakt kann sich von dem Festkontakt lösen. Der Reststrom, der über den Lichtbogen fließt, kann jedoch über die pyrotechnische Trennvorrichtung ohne das Auslösen eines weiteren Lichtbogens getrennt werden, so dass der an dem ersten Schaltrelais auftretende Lichtbogen zusammenbricht.

Wie bereits erwähnt, soll das pyrotechnische Trennelement nur den Reststrom, der bei einer Levitation auftritt, unterbrechen. Insofern ist das pyrotechnische Trennelement nur für einen solchen Strom auszulegen, der während einer Levitation in dem ersten Schaltrelais fließt. Einen solchen Reststrom kann eine herkömmliche Sicherung nicht sicher trennen, da die Energie des Reststromes teilweise nicht ausreicht, die Sicherung auszulösen.

Gemäß einem Ausführungsbeispiel wird vorgeschlagen, dass die pyrotechnische Trennvorrichtung und das erste Schaltrelais in einem gemeinsamen Gehäuse verbaut sind. Somit kann in einer kompakten Baugruppe die sicherheitskritische Abschaltmechanik für einen Kurzschlussfall in einem Hochvoltbordnetzsystem zur Verfügung gestellt werden.

Im Kurzschlussfall kann es dazu kommen, dass zwischen den Ausgangskontakten ein Kurzschlussstrom fließt. Das erste Schaltrelais öffnet dabei aufgrund der Levitation zumindest teilweise. Ein Reststrom fließt während dieser Levitation über das erste Schaltrelais, insbesondere entlang des dort entstehenden Lichtbogens. Das pyrotechnische Trennelement ist zum Trennen dieses Reststroms ausgelegt.

Gemäß einem weiteren Aspekt wird das Hochvoltbordnetzsystem so betrieben, dass in einem Betriebsfall ein zweites Schaltrelais zwischen dem High-side Anschlusskontakt und dem High-side Ausgangskontakt geöffnet wird. D.h., im Betriebsfall kann ein Schalten über das zweite Schaltrelais erfolgen, da die Schaltströme hinreichend klein sind.

Überschreiten die Schaltströme jedoch mehrere 100A, z.B. in einem Fehlerfall" so kann eine Levitation im ersten Schaltrelais zwischen dem Low-side Anschlusskontakt und dem Ausgangskontakt auftreten. Die Levitation an dem ersten Schaltrelais führt zu einem teilweisen Öffnen des ersten Schaltrelais. Der über den durch die Levitation gebildeten Lichtbogen fließende Reststrom wird gegenständlich durch die pyrotechnische Trennvorrichtung getrennt.

Nachfolgend wird der Gegenstand anhand einer ein Ausführungsbeispiel zeigenden Zeichnungen näher erläutert. In der Zeichnung zeigen:

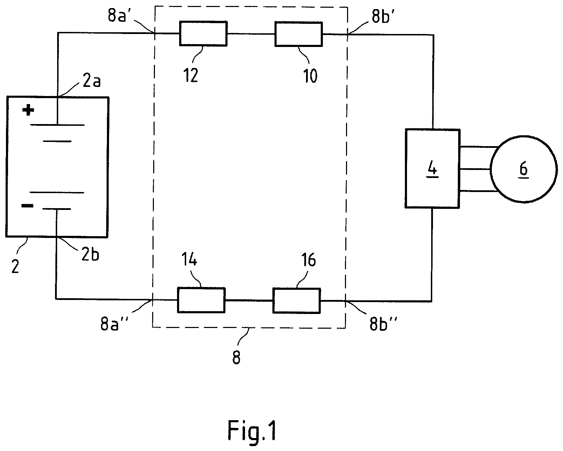

- Fig. 1: ein schematisches Blockschaltbild eines gegenständlichen Hochvoltbordnetzsystems gemäß einem Ausführungsbeispiel.

Fig. 1 zeigt eine Hochvoltbatterie 2, mit einem Pluspol 2a an High-side und einem Minuspol 2b an Low-side. Ferner zeigt Fig. 1 einen DC/DC Wandler 4, der mit einem elektrischen Antriebsmotor 6 verbunden ist. Ein Hochvoltbordnetzsystem 8 ist über einen High-side Anschlusskontakt 8a' mit dem Pluspol 2a der Hochvoltbatterie 2 verbunden. Das Hochvoltbordnetzsystem 8 ist über einen Low-side Anschlusskontakt 8a" mit dem Minuspol 2b der Hochvoltbatterie 2 verbunden. Ausgangsseitig ist das Hochvoltbordnetzsystem 8 high-side über einen Ausgangskontakt 8b' und low-side über einen Ausgangskontakt 8b" mit dem DC/DC Wandler 4 verbunden. Zwischen dem Anschlusskontakt 8a' und dem Ausgangskontakt 8b' ist zumindest ein Schaltrelais 10 angeordnet. Darüber hinaus kann eine Sicherung 12 vorgesehen sein. Parallel hierzu kann (nicht gezeigt) ein weiteres Relais und ein ohmscher Widerstand geschaltet sein. Diese können z.B. als Strombegrenzer im Startfall, insbesondere bei einem Warmstart, dienen, Der Startstrom fließt dann zunächst über das weitere Relais und den Widerstand und ist hierdurch begrenzt.

Zwischen dem Anschlusskontakt 8a" und dem Ausgangskontakt 8b" ist vorzugsweise in einem Gehäuse zusammengebaut zumindest ein pyrotechnisches Trennelement 14 und ein Schaltrelais 16 angeordnet.

Im Betrieb fließt von der Hochvoltbatterie 2 ein Strom über das Hochvoltbordnetzsystem 8 zu dem DC/DC Wandler 4. Sowohl High-side als auch Low-side fließen die Betriebsströme.

Die beiden Schaltrelais 10 und 16 sind so ausgelegt, dass sie dauerhaft die Betriebsströme, welche auch 100A und mehr betragen können, tragen können, ohne dass diese beschädigt werden.

In normalen Abschaltsituationen, d.h. im Betrieb kann es notwendig sein, die Hochvoltbatterie 2 von dem DC/DC Wandler 4 elektrisch zu trennen. Hierfür wird das Schaltrelais 10 geöffnet, um den Betriebsstrom zu unterbrechen. Da der Betriebsstrom einige 100A betragen kann, ist das Schaltrelais 10 zum Schalter solch hoher Ströme ausgelegt. Nachdem das Schaltrelais 10 geöffnet wurde, kann das Schaltrelais 16 stromlos geöffnet werden und es kann eine galvanische Trennung zwischen der Hochvoltbatterie 2 und dem DC/DC Wandler 4 durch das Bordnetzsystem 8 gewährleistet sein.

Sollte das Schaltrelais 10 auch den Abschaltstrom nicht trennen, gibt es als "Backup" immer noch das pyrotechnisches Trennelement 14 und ein Schaltrelais 16 welche definitiv den Strom abschalten können.

Im Fehlerfall können kurzfristig sehr hohe Kurzschlussströme fließen, welche erheblich über den Betriebsströmen liegen. Im Fehlerfall ist ein unmittelbares Trennen sowohl High-side als auch Low-side notwendig.

Die Erfinder haben erkannt, dass die Levitation, die im Falle eines Kurzschlussstromes über das Schaltrelais 16 auftreten kann, nutzbar gemacht werden kann. Insbesondere haben die Erfinder erkannt, dass im Falle eines Kurzschlussstromes ein erheblich höherer Strom als der Betriebsstrom über das Schaltrelais 16 fließt.

Am Schaltrelais 16, welches für geringere Schaltströme ausgelegt ist, als das Schaltrelais 10, kommt es zu Levitation. D.h., dass trotz aktivierter Spule des Schaltrelais 16 der Brückenkontakt vom Festkontakt angehoben wird. Dies erfolgt aufgrund der elektromagnetischen Abstoßung der stromführenden Teile des Festkontaktes bzw. des Brückenkontaktes.

Durch die Levitation, die auch elektromagnetische Repulsion genannt wird, kommt es zum kurzzeitigen Trennen des Strompfads über das Schaltrelais 16. Da die Levitation jedoch nur eine geringe Anhebung des Brückenkontakts von dem Festkontakt in dem Schaltrelais 16 bewirkt, beginnt ein Lichtbogen zwischen diesen beiden Kontakten zu brennen und ein Reststrom fließt über diesen Lichtbogen.

Da im Fehlerfall eine komplette Abtrennung der Hochvoltbatterie 2 von dem DC/DC Wandler 4 notwendig ist, wird erfindungsgemäß nun vorgeschlagen, dass der bei der Levitation entstehende Reststrom über das pyrotechnische Trennelement 14 getrennt wird. Hierzu empfängt das pyrotechnische Trennelement 14 ein externes Steuersignal. Über dieses externe Steuersignal wird das pyrotechnische Trennelement 14 angesteuert und die darin verbaute Zündpille gezündet. Die pyrotechnische Reaktion führt zu einem mechanischen Auftrennen eines Leiters im Bereich des pyrotechnischen Trennelements 14, so dass eine elektrische Verbindung zwischen dem Anschlusskontakt 8a" und dem Ausgangskontakt 8b" vollständig getrennt wird.

Da der zu trennende Reststrom erheblich geringer ist, als der Kurzschlussstrom, kommt es im Bereich des pyrotechnischen Trennelements 14 nicht mehr zu einer Lichtbogenbildung. Vielmehr wird der Strom komplett getrennt. Da das Trennelement 14 nur zum Trennen des Reststromes ausgelegt sein muss, kann es erheblich kleiner und weniger leistungsstark sein, als wenn es zum Trennen des Kurzschlussstroms gebildet wäre.

Das pyrotechnische Trennelement 14 sowie das Schaltrelais 16 können in einer Baugruppe zusammen mit einem Gehäuse verbaut sein. Somit ist es besonders einfach möglich, nach einem Crashfall diese Baugruppe auszutauschen, insbesondere wenn diese beispielsweise über Steckkontakte mit dem Hochvoltbordnetzsystem 8 verbindbar ist. Da das pyrotechnische Trennelement 14 auslöst, ist ohnehin ein Austausch notwendig. Bei diesem Austausch kann gleich das Schaltrelais 16 mit ausgetauscht werden, welches durch den bei der Levitation entstehenden Lichtbogen in der Regel stark beschädigt oder zerstört worden ist.

Auch ist es möglich die Kombination aus pyrotechnischen Trennelement 14 und Schaltrelais 16 gegebenenfalls mit einer anderen Dimensionierung des Schaltrelais 16 auch High-side einzusetzen, d.h. im Ersatz für das Schaltrelais 10 und die Sicherung 12. Somit ist auch ein Bordnetzsystem 8 vorstellbar, bei welchem sowohl High-side als auch Low-side eine Baugruppe gebildet aus dem pyrotechnischen Trennelement 14 und einem Schaltrelais 10, 16 vorgesehen ist.

Eine vollständige galvanische Trennung wird dadurch erreicht, dass gegenständlich zumindest Low-side ein pyrotechnisches Trennelement einen Reststrom trennt.

Die Erfindung ist durch die Ansprüche definiert.

### Bezugszeichenliste

- 2: Hochvoltbatterie
- 2a: Pluspol
- 2b: Minuspol
- 4: DC/DC Wandler
- 6: Antriebsmotor
- 8: Hochvoltbordnetzsystem
- 8a', 8a": Anschlusskontakt
- 8b', 8b": Ausgangskontakt
- 10: Schaltrelais
- 12: Sicherung
- 14: pyrotechnisches Trennelement
- 16: Schaltrelais

## Patentansprüche

1. Hochvoltbordnetzsystem (8)umfassend,
- einen Hochvoltbatterieanschluss mit einem High-Side Anschlusskontakt (8a') und einem Low-Side Anschlusskontakt (8a"),
- einem Hochvoltausgang mit einem High-Side Ausgangskontakt (8b') und einem Low-Side Ausgangskontakt (8b") und
- zumindest einer zwischen dem Low-Side Anschlusskontakt (8a") und dem Low-Side Ausgangskontakt (8b") angeordneten Reihenschaltung aus einem erstes Schaltrelais (16) und einer pyrotechnischen Trennvorrichtung (14), **dadurch gekennzeichnet,**
- **dass** die pyrotechnische Trennvorrichtung nur für einen während einer Levitation in dem ersten Schaltrelais (16) fließenden Reststrom ausgelegt ist.

2. Hochvoltbordnetzsystem (8)nach Anspruch 1, wobei zwischen dem High-Side Anschlusskontakt (8a') und dem High-Side Ausgangskontakt (8b') zumindest ein zweites Schaltrelais (10) angeordnet ist.

3. Hochvoltbordnetzsystem (8) nach Anspruch 1 oder 2, wobei die Stromtragfähigkeit des ersten und des zweiten Schaltrelais (10, 16) in etwa gleich ist, insbesondere dass die Gleichstromtragfähigkeit des ersten und des zweiten Schaltrelais (10, 16) über 100 Ampere, vorzugsweise über 200 Ampere liegt.

4. Hochvoltbordnetzsystem (8) nach Anspruch 1 oder 2, wobei das erste Schaltrelais (16) für einen geringeren Schaltstrom als das zweite Schaltrelais (10) ausgelegt ist.

5. Hochvoltbordnetzsystem (8) nach einem der vorangehenden Ansprüche, wobei die pyrotechnische Trennvorrichtung (14) durch ein Trennsignal aktiviert wird, insbesondere dass die pyrotechnische Trennvorrichtung (14) von einem Airbagsteuersignal aktiviert wird.

6. Hochvoltbordnetzsystem (8)nach einem der vorangehenden Ansprüche, wobei die pyrotechnische Trennvorrichtung (14) derart angesteuert wird, dass sie bei einer Levitation des ersten Schaltrelais (16) aktiviert ist.

7. Hochvoltbordnetzsystem (8) nach einem der vorangehenden Ansprüche, wobei die pyrotechnische Trennvorrichtung (14) und das erste Schaltrelais (16) in einem gemeinsamen Gehäuse verbaut sind.

8. Hochvoltbordnetzsystem (8) nach einem der vorangehenden Ansprüche, wobei das erste Schaltrelais (16) bei einem zwischen den Ausgangskontakten (8b', 8b") fließenden Kurzschlussstrom nur teilweise öffnet wobei dann ein Reststrom über einen bei einer Levitation des ersten Schaltrelais (16) entstehenden Lichtbogen fließt und dass die pyrotechnische Trennvorrichtung (14) zum Trennen des Reststroms ausgelegt ist.

9. Verfahren zum Betreiben eines Hochvoltbordnetzsystem (8) nach einem der Ansprüche 1 bis 8 bei dem,
- in einem Betriebsfall ein zweites Schaltrelais (10) zwischen dem High-Side Anschlusskontakt (8a') und dem High-Side Ausgangskontakt (8b') geöffnet wird, wobei
- im Falle eines Kurzschlusses zusätzlich zunächst das erste Schaltrelais (16) zwischen dem Low-Side Anschlusskontakt (8a") und dem Low-Side Ausgangskontakt (8b") durch eine an dem ersten Schaltrelais (16) auftretende Levitation geöffnet wird, und dass ein über den durch die Levitation gebildeten Lichtbogen fließender Reststrom durch die pyrotechnischen Trennvorrichtung (14) unterbrochen wird, **dadurch gekennzeichnet dass** die pyrotechnische Trennvorrichtung (14) nur für einen während einer Levitation in dem ersten Schaltrelais (16) fließenden Reststrom ausgelegt ist.

## Claims

1. High-voltage vehicle electrical system (8), comprising
- a high-voltage battery terminal having a high-side terminal contact (8a') and a low-side terminal contact (8a"),
- a high-voltage output having a high-side output contact (8b') and a low-side output contact (8b"), and
- at least one series circuit comprising of a first switching relay (16) and a pyrotechnic isolating device (14) and being arranged between the low-side terminal contact (8a") and the low-side output contact (8b"),
**characterised in that**
- the pyrotechnic isolating device is configured only for a residualswitching current flowing during levitation in the first switching relay (16).

2. High-voltage vehicle electrical system (8) according to Claim 1, **wherein**
- at least one second switching relay (10) is arranged between the high-side terminal contact (8a') and the high-side output contact (8b').

3. High-voltage vehicle electrical system (8) according to Claim 1 or 2, **wherein**
- the current-carrying capacities of the first and second switching relays (10, 16) are approximately equal, and in particular the dc current-carrying capacities of the first and second switching relays (10, 16) are more than 100 amperes, preferably more than 200 amperes.

4. High-voltage vehicle electrical system (8) according to claim 1 or 2,
**wherein**
- the first switching relay (16) is configured for a lower switching current than the second switching relay (10).

5. High-voltage vehicle electrical system (8) according to any of the preceding claims,
**wherein**
- the pyrotechnic isolating device (14) is activated by an isolating signal, particularly in that the pyrotechnic isolating device (14) is activated by an airbag control signal.

6. High-voltage vehicle electrical system (8) according to any one of the preceding claims,
**wherein**
- the pyrotechnic isolating device (14) is driven in such a way that it is activated in the event of levitation of the first switching relay (16).

7. High-voltage vehicle electrical system (8) according to any one of the preceding claims,
**wherein**
- the pyrotechnic isolating device (14) and the first switching relay (16) are mounted in a common housing.

8. High-voltage vehicle electrical system (8) according to any one of the preceding claims,
**wherein**
- the first switching relay (16) is only partially opened in the event of a short-circuit current flowing between the output contacts (8b', 8b"), a residual current then flowing through an arc discharge formed in the event of levitation of the first switching relay (14), and in that the pyrotechnic isolating device (14) is configured for isolation of the residual current.

9. Method for operating a high-voltage vehicle electrical system (8) according to any one of Claims 1 to 8, wherein
- in an operating situation, a second switching relay (16) between the high-side terminal contact (8a') and the high-side output contact (8b) is opened,
**wherein**
- in case of a short circuit in, in addition the first switching relay (16) between the low-side terminal contact (8a") and the low-side output contact is initially opened caused by levitation at the first switching relay (16), and that a residual current flowing through the arc discharge formed by the levitation is interrupted by the pyrotechnic isolating device (14),
**characterized in that**
- the pyrotechnic isolation device (14) is configured only for switching a residual current flowing during levitation in the first switching relay (16).

## Revendications

1. Système de réseau de bord haute tension (8), comprenant :
une connexion de batterie avec un contact de connexion High Side (8a') et un contact de connexion Low Side (8a"), une sortie haute tension avec un contact de sortie High Side (8b') et un contact de sortie Low Side (8b""), et entre le contact de connexion High Side (8a') et le contact de sortie Low Side (8b""), au moins un circuit série consistant en un relais de commutation (16) et un dispositif de coupure pyrotechnique (14), **caractérisé en ce que**
le dispositif de coupure pyrotechnique n'est conçu que pour un courant résiduel passant dans le premier relais de commutation (16) pendant une lévitation.

2. Système de réseau de bord haute tension (8) selon la revendication 1, où entre le contact de connexion High Side (8a') et le contact de sortie Low Side (8b""), au moins un deuxième relais de commutation (10) est agencé.

3. Système de réseau de bord haute tension (8) selon la revendication 1 ou 2, où la capacité de charge de courant des premier et deuxième relais de commutation (10, 16) est environ égale, en particulier la capacité de charge de courant continu des premier et deuxième relais de commutation (10, 16) se situe à plus de 100 Ampère, de préférence plus de 200 Ampère.

4. Système de réseau de bord haute tension (8) selon la revendication 1 ou 2, où le premier relais de commutation (16) est conçu pour un courant de commutation plus faible que le deuxième relais de commutation (10).

5. Système de réseau de bord haute tension (8) selon l'une des revendications précédentes, où le dispositif de coupure pyrotechnique (14) est activé par un signal de coupure, en particulier en ce que le dispositif de coupure pyrotechnique (14) est activé par un signal de commande d'airbag.

6. Système de réseau de bord haute tension (8) selon l'une des revendications précédentes, où le dispositif de coupure pyrotechnique (14) est commandé de sorte que lors d'une lévitation, le premier relais de commutation (16) est activé.

7. Système de réseau de bord haute tension (8) selon l'une des revendications précédentes, où le dispositif de coupure pyrotechnique (14) et le premier relais de commutation (16) sont montés dans un logement commun.

8. Système de réseau de bord haute tension (8) selon l'une des revendications précédentes, où le premiers relais de commutation (16) ne s'ouvre que partiellement lors d'un court-circuit entre les contacts de sortie (8b', 8b"), où un courant résiduel passe alors par un arc électrique se formant lors d'une lévitation du premier relais de commutation (16), et le dispositif de coupure pyrotechnique (14) est conçu pour couper le courant résiduel.

9. Procédé de fonctionnement d'un système de réseau de bord haute tension (8) selon l'une des revendications 1 à 8, dans lequel, en mode fonctionnement, un deuxième relais de commutation (10) est ouvert entre le contact de connexion High Side (8a') et le contact de sortie High Side (8b'), où en cas de court-circuit, en outre le premier relais de commutation (16) s'ouvre d'abord entre le contact de connexion Low Side (8a") et le contact de sortie Low Side (8b") par une lévitation se présentant sur le premier relais de commutation (16), et où un courant résiduel passant dans un arc électrique formé par la lévitation est interrompu par le dispositif de coupure pyrotechnique (14), **caractérisé en ce que** le dispositif de coupure pyrotechnique (14) n'est conçu que pour un courant résiduel passant dans le premier relais de commutation (16) pendant une lévitation.
